# EUROPEAN PATENT SPECIFICATION

(11) **EP 4 029 911 B1**
(45) Date of publication and mention of the grant of the patent: **28.05.2025**
(21) Application number: 20862800.8
(22) Date of filing: 01.09.2020
(51) Int. Cl.: C08L 15/00, B60C 1/00, C08C 19/25, C08F 12/02, C08F 36/04, C08L 9/00, C08C 19/22, C08C 19/44, C08F 236/06

(54) **POLYMER COMPOSITION, CROSSLINKED POLYMER AND TIRE**
POLYMERZUSAMMENSETZUNG, VERNETZTES POLYMER UND REIFEN
COMPOSITION POLYMÈRE, POLYMÈRE RÉTICULÉ ET PNEUMATIQUE

(30) Priority: 10.09.2019 JP 2019164427
(43) Date of publication of application: 20.07.2022
(73) Proprietor: ENEOS Materials Corporation, Tokyo 105-7109 (JP)
(72) Inventor: SHIN, Kanyou, Tokyo 105-8640 (JP)
(74) Representative: TBK
(86) International application number: PCT/JP2020/033111
(87) International publication number: WO 2021/049377

(56) References cited:
- EP-A1- 1 345 976
- EP-A1- 3 045 495
- WO-A1-2012/111640
- WO-A1-2013/031599
- WO-A1-2017/221943
- JP-A- 2013 108 036
- JP-A- 2018 095 777
- JP-A- 2018 507 302
- JP-A- 2019 089 911
- JP-A- 2019 131 810
- DATABASE WPI Week 201781, Derwent World Patents Index; AN 2017-810283, XP002807612
- DATABASE WPI Week 201817, Derwent World Patents Index; AN 2018-15058R, XP002807613

## Description

### TECHNICAL FIELD

The present invention relates to a polymer composition, a crosslinked polymer, and a tire produced using the crosslinked polymer.

### BACKGROUND ART

In recent years, in association with a global trend to restrict carbon dioxide emissions along with an increase in awareness of environmental issues, there has been a growing demand for a reduction in fuel consumption of an automobile. In order to meet such demand, there is also a requirement for tire performance that rolling resistance be reduced. Hitherto, as a technique for reducing the rolling resistance of a tire, a technique involving optimizing a tire structure has been investigated, but there is also a currently performed general technique involving using, as a polymer composition to be applied to a tire, one having a low tanδ (hereinafter sometimes referred to as "low hysteresis loss property" or "low loss property") and being excellent in low heat build-up.

A conceivable method of obtaining such polymer composition having low heat build-up involves, for example, reducing an amount of a filler, such as carbon black or silica, or using carbon black having a large particle diameter. However, any such method inevitably entails reductions in reinforcing property, wear resistance, and grip property on a wet road surface (hereinafter sometimes referred to as "wet grip property") of the polymer composition.

In view of the foregoing, for example, an investigation has been made on use of a modified conjugated diene-based polymer, which is obtained by forming an active polymer having a metal end and modifying the active polymer through introduction of a specific modifier thereinto, as a tread material for a tire (see, for example, Patent Literature 1). In Patent Literature 1, there is a disclosure that this material, when used as a tread material for a tire, provides a product excellent in heat build-up, wear resistance, and wet grip property.

WO 2012/111640 A1 relates to a rubber composition which is obtained by kneading a rubber component, which contains 30-95% by mass of a conjugated diene polymer (A) and 5-70% by mass of crosslinked rubber particles (B), and 20-100 parts by mass of silica (C) per 100 parts by mass of the rubber component.

JP 2018-095777 A relates to a rubber composition for a tire containing 3-30 pts.mass of crosslinked rubber particles based on 100 pts.mass of a hydrogenated copolymer which is obtained by hydrogenating an aromatic vinyl-conjugated diene copolymer and which has a weight-average molecular weight measured by gel permeation chromatography of 300,000 or more and a hydrogenation rate of a conjugated diene moiety of 80 mol% or more.

JP 2019-089911 A relates to a rubber composition for tire containing a rubber component containing at least a rubber component A and a rubber component B, and a filler which is carbon black and/or silica, consisting of 2 or more polymer phases having different distribution factor of the filler, in which the rubber components A and B constitute polymer phases A and B respectively, 85% or more of total blended amount of the filler exists in the polymer phase A, a peak A of tanδ of the polymer phase A and a peak B of tanδ of the polymer phase B exist in a tanδ curve of a vulcanizate of the rubber composition for tire, temperature of the peak A is higher than that of the peak B, and temperature difference of the peak A and the peak B is 45°C or higher.

### CITATION LIST

### Patent Literature

PTL 1: JP 2016-528369 A

### SUMMARY OF INVENTION

### Technical Problem

However, when the modified conjugated diene-based polymer disclosed in Patent Literature 1 is used as a tread material for a tire, there is a problem in that sufficient performance is difficult to obtain in terms of impact resilience owing to an excessive increase in dispersibility of a filler, such as silica, contained in a polymer composition.

In view of the foregoing, some aspects according to the invention provide a polymer composition that has satisfactory processability, and is suited for the production of a tire highly well balanced among impact resilience, wet grip property, low loss property, and tensile strength. In addition, some aspects according to the invention provide a tire that is highly well balanced among impact resilience, wet grip property, low loss property, and tensile strength.

### Solution to Problem

The invention has been made in order to solve at least part of the above-mentioned problems, and can be realized as any one of the following aspects.

According to one aspect of the invention, there is provided a polymer composition including:
(A) a conjugated diene-based polymer that is a reaction product between a polymer having an active polymerization end, the polymer being obtained by polymerizing a conjugated diene compound, or a conjugated diene compound and an aromatic vinyl compound, in the presence of an alkali metal compound or an alkaline earth metal compound, and a compound represented by any one of the following general formulae (1) to (3); and
(B) conjugated diene-based polymer particles: 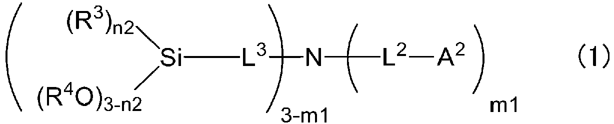 in the formula (1), A² represents a monovalent group bonded to L² via an imino group, an amide group, a (thio)carbonyl group, a (thio)carbonyloxy group, a sulfide, or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic halide, an imidazolyl group, or a group represented by the following formula (1a), L² and L³ each independently represent a single bond or a hydrocarbylene group having 1 to 20 carbon atoms, R³ and R⁴ each independently represent a hydrocarbyl group having 1 to 4 carbon atoms, n2 represents from 0 to 3, and m1 represents 0 or 1; 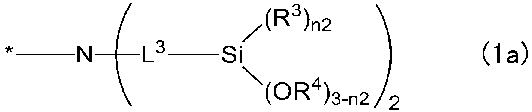 in the formula (1a), L³, R³, R⁴, and n2 are the same as in the formula (1), and "*" represents a site to be bonded to L²; 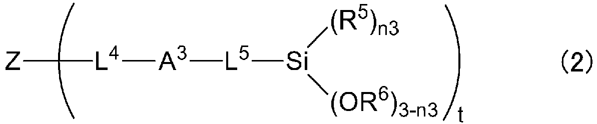 in the formula (2), A³s each independently represent an imino group, an amide group, a (thio)carbonyl group, a (thio)carbonyloxy group, a secondary amino group, or a tertiary amino group, Z represents a nitrogen atom-containing or -free t-valent group having 1 to 20 carbon atoms, L⁴ represents a single bond or a hydrocarbylene group having 1 to 20 carbon atoms, L⁵ represents a hydrocarbylene group having 1 to 20 carbon atoms, R⁵ and R⁶ each independently represent a hydrocarbyl group having 1 to 4 carbon atoms, n3 represents 0 or 1, and "t" represents 2 or 3; and 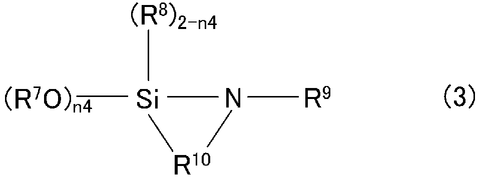 in the formula (3), R⁷ and R⁸ each independently represent a hydrocarbyl group having 1 to 20 carbon atoms, R⁹ represents a hydrocarbyl group having 1 to 20 carbon atoms, or a substituted alkyl group having 1 to 20 carbon atoms, at least one of a hydrogen atom or -CH₂- of the alkyl group being substituted with a group containing at least one kind of element selected from the group consisting of: silicon; nitrogen; phosphorus; oxygen; and sulfur, or represents an aromatic group having 6 to 20 carbon atoms, the aromatic group containing at least one kind of element selected from the group consisting of: nitrogen; phosphorus; oxygen; and sulfur, R¹⁰ represents an alkanediyl group having 1 to 20 carbon atoms, and n4 represents 1 or 2.

In the above aspect of the polymer composition, the polymer composition may include 1 mass% or more and 50 mass% or less of the conjugated diene-based polymer particles (B) with respect to 100 mass% of all conjugated diene-based polymer components contained in the polymer composition.

In any of the above aspects of the polymer composition, the conjugated diene-based polymer (A) may have a weight average molecular weight in terms of polystyrene measured by gel permeation chromatography of from 100,000 to 2,000,000.

In any of the above aspects of the polymer composition, the conjugated diene-based polymer particles (B) may have a number average particle diameter measured by a light scattering method of 10 nm or more and 800 nm or less.

In any of the above aspects of the polymer composition, the conjugated diene-based polymer particles (B) may be crosslinked particles.

The above aspects of the polymer composition may further include a crosslinking agent.

According to one aspect of the invention, there is provided a crosslinked polymer produced by using the polymer composition of any one of the above-mentioned aspects.

According to one aspect of the invention, there is provided a tire including the crosslinked polymer of the above-mentioned aspect.

### ADVANTAGEOUS EFFECTS OF INVENTION

According to the polymer composition of the invention, the crosslinked polymer (tire), which has satisfactory processability, and is highly well balanced among impact resilience, wet grip property, low loss property, and tensile strength, can be produced.

### DESCRIPTION OF EMBODIMENTS

Preferred embodiments of the invention are described in detail below. It should be appreciated that the invention is not limited to the embodiments described below, and includes various modification examples performed within the scope of the invention.

Herein, a numerical range described like "from X to Y" is to be construed to include a numerical value X as a lower limit value and a numerical value Y as an upper limit value.

Herein, "(meth)acrylic acid ···" is a concept comprehending both of "acrylic acid ···" and "methacrylic acid ···", and "··· (meth)acrylate" is a concept comprehending both of "··· acrylate" and "··· methacrylate".

### 1. Polymer Composition

A polymer composition according to one embodiment of the invention contains: (A) a conjugated diene-based polymer that is a reaction product between a polymer having an active polymerization end, which is obtained by polymerizing a conjugated diene compound, or a conjugated diene compound and an aromatic vinyl compound, in the presence of an alkali metal compound or an alkaline earth metal compound, and a compound represented by any one of the following general formulae (1) to (3) (hereinafter sometimes referred to as "conjugated diene-based polymer (A)"); and (B) conjugated diene-based polymer particles.

The polymer composition according to this embodiment is an unvulcanized polymer composition obtained by kneading the conjugated diene-based polymer (A) and the conjugated diene-based polymer particles (B), and as required, other additives. The polymer composition according to this embodiment forms a crosslinked polymer by, for example, being subjected to crosslinking treatment, such as vulcanization.

Each component contained in the polymer composition according to this embodiment is described below.

### 1.1. Conjugated Diene-based Polymer (A)

The polymer composition according to this embodiment includes a conjugated diene-based polymer (A) that is a reaction product between a polymer having an active polymerization end, which is obtained by polymerizing a conjugated diene compound, or a conjugated diene compound and an aromatic vinyl compound, in the presence of an alkali metal compound or an alkaline earth metal compound, and a compound represented by any one of the following general formulae (1) to (3): 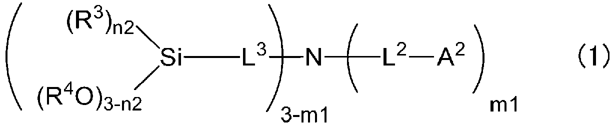 in the formula (1), A² represents a monovalent group bonded to L² via an imino group, an amide group, a (thio)carbonyl group, a (thio)carbonyloxy group, a sulfide, or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic halide, an imidazolyl group, or a group represented by the following formula (1a), L² and L³ each independently represent a single bond or a hydrocarbylene group having 1 to 20 carbon atoms, R³ and R⁴ each independently represent a hydrocarbyl group having 1 to 4 carbon atoms, n2 represents from 0 to 3, and m1 represents 0 or 1; 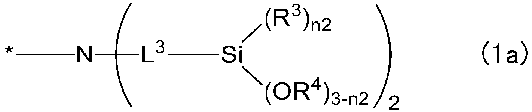 in the formula (1a), L³, R³, R⁴, and n2 are the same as in the formula (1), and "*" represents a site to be bonded to L²; 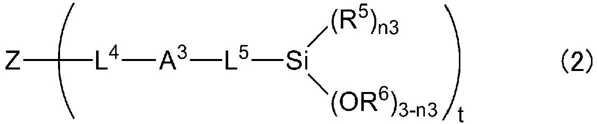 in the formula (2), A³s each independently represent an imino group, an amide group, a (thio)carbonyl group, a (thio)carbonyloxy group, a secondary amino group, or a tertiary amino group, Z represents a nitrogen atom-containing or -free t-valent group having 1 to 20 carbon atoms, L⁴ represents a single bond or a hydrocarbylene group having 1 to 20 carbon atoms, L⁵ represents a hydrocarbylene group having 1 to 20 carbon atoms, R⁵ and R⁶ each independently represent a hydrocarbyl group having 1 to 4 carbon atoms, n3 represents 0 or 1, and "t" represents 2 or 3; and 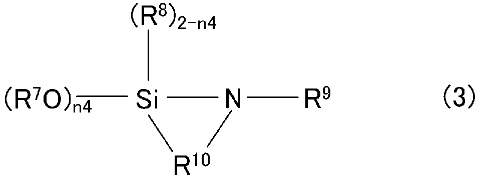 in the formula (3), R⁷ and R⁸ each independently represent a hydrocarbyl group having 1 to 20 carbon atoms, R⁹ represents a hydrocarbyl group having 1 to 20 carbon atoms, or a substituted alkyl group having 1 to 20 carbon atoms, at least one of a hydrogen atom or -CH₂- of the alkyl group being substituted with a group containing at least one kind of element selected from the group consisting of: silicon; nitrogen; phosphorus; oxygen; and sulfur, or represents an aromatic group having 6 to 20 carbon atoms, the aromatic group containing at least one kind of element selected from the group consisting of: nitrogen; phosphorus; oxygen; and sulfur, R¹⁰ represents an alkanediyl group having 1 to 20 carbon atoms, and n4 represents 1 or 2.

The conjugated diene-based polymer (A) has a structural unit derived from the conjugated diene compound, and has a structure derived from the compound represented by any one of the general formulae (1) to (3) at the active polymerization end thereof. Such conjugated diene-based polymer (A) may be obtained by first polymerizing monomers including the conjugated diene compound in the presence of an alkali metal compound or an alkaline earth metal compound to provide a polymer having an active polymerization end (polymerization step), and then allowing the polymer having an active polymerization end to react with the compound represented by any one of the general formulae (1) to (3) (hereinafter sometimes referred to as "specific modifier") (modification step).

### <Polymerization Step>

Examples of the conjugated diene compound that may be used in the polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Of those, 1,3-butadiene, isoprene, and 2,3-dimethyl-1,3-butadiene are preferred. The conjugated diene compounds may be used alone or in combination thereof.

The conjugated diene-based polymer (A) may be a homopolymer of the conjugated diene compound, but from the viewpoint of enhancing the strength of the crosslinked polymer, is preferably a copolymer of the conjugated diene compound and the aromatic vinyl compound. In particular, a copolymer including 1,3-butadiene and styrene in its monomer composition is preferred because of a high living property in anionic polymerization. When the conjugated diene-based polymer (A) is a copolymer of the conjugated diene compound and the aromatic vinyl compound, the conjugated diene-based polymer (A) typically has a random copolymerization moiety in which the conjugated diene compound and the aromatic vinyl compound are irregularly distributed, and may further have a block moiety formed of a structural unit derived from the conjugated diene compound or the aromatic vinyl compound.

Examples of the aromatic vinyl compound that may be used in the polymerization include styrene, 2-methylstyrene, 3-methylstyrene, 4-methylstyrene, α-methylstyrene, 2,4-dimethylstyrene, 2,4-diisopropylstyrene, 5-tert-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-tert-butylstyrene, 3-tert-butylstyrene, 4-tert-butylstyrene, vinylxylene, vinylnaphthalene, vinylpyridine, diphenylethylene, and a tertiary amino group-containing diphenylethylene (e.g., 1-(4-N,N-dimethylaminophenyl)-1-phenylethylene). Of those, styrene and α-methylstyrene are preferred. The aromatic vinyl compounds may be used alone or in combination thereof.

When the conjugated diene-based polymer (A) is a copolymer of the conjugated diene compound and the aromatic vinyl compound, the content of the aromatic vinyl compound (aromatic vinyl content) is set to preferably from 3 mass% to 55 mass%, more preferably from 5 mass% to 50 mass% in 100 mass% in total of the conjugated diene compound and the aromatic vinyl compound to be used for the polymerization from the viewpoint of achieving a satisfactory balance between the low loss property and the wet grip property of the crosslinked polymer to be obtained. The aromatic vinyl content of the conjugated diene-based polymer (A) may be measured by ¹H-NMR.

In the polymerization, a monomer other than the conjugated diene compound and the aromatic vinyl compound may be used. Examples of the other monomer include acrylonitrile, methyl (meth)acrylate, ethyl (meth)acrylate, and hydroxyethyl (meth)acrylate. The use amount of the other monomer is set to preferably 25 mass% or less, more preferably 15 mass% or less, particularly preferably 10 mass% or less in 100 mass% of the total amount of the monomers to be used for the polymerization.

As a polymerization method to be used, any of a solution polymerization method, a vapor phase polymerization method, and a bulk polymerization method may be used, but the solution polymerization method is particularly preferred. In addition, any of a batch system and a continuous system may be used as a mode of polymerization. When the solution polymerization method is used, a specific example of the polymerization method is a method involving polymerizing monomers including the conjugated diene compound in an organic solvent in the presence of a polymerization initiator and a randomizer that is to be used as required.

An alkali metal compound or an alkaline earth metal compound may be used as the polymerization initiator. Specific examples thereof include alkyllithiums, such as methyllithium, ethyllithium, n-propyllithium, n-butyllithium, sec-butyllithium, and tert-butyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, 3-(dimethylamino)propyllithium, naphthylsodium, naphthyl potassium, di-n-butylmagnesium, di-n-hexylmagnesium, ethoxypotassium, and calcium stearate. Of those, a lithium compound is preferred. The total use amount of the polymerization initiator is preferably set to from 0.2 mmol to 20 mmol with respect to 100 g of the monomers to be used for the polymerization. The polymerization initiators may be used alone or in combination thereof.

In addition, the polymerization reaction may be performed in the presence of a compound (hereinafter sometimes referred to as "modifying initiator") obtained by mixing the alkali metal compound or the alkaline earth metal compound with a compound having a functional group having an interaction with silica. When the polymerization is performed in the presence of the modifying initiator, the functional group having an interaction with silica can be introduced into the polymerization initiation end of the conjugated diene-based polymer (A). Herein, the "interaction" means the formation of a covalent bond between molecules, or the formation of an intermolecular force weaker than a covalent bond (e.g., an electromagnetic force acting between molecules, such as an ion-dipole interaction, a dipole-dipole interaction, a hydrogen bond, or a van der Waals force). The "functional group having an interaction with silica" preferably has at least one kind selected from the group consisting of: a nitrogen atom; a sulfur atom; a phosphorus atom; and an oxygen atom.

The modifying initiator is preferably a reaction product between a lithium compound, such as an alkyllithium, and a nitrogen-containing compound, such as a secondary amine compound. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, and 1,3-ditrimethylsilyl-1,3,5-triazinane. When the polymerization is performed in the presence of the modifying initiator, the polymerization may be performed as follows: the alkali metal compound or the alkaline earth metal compound, and the compound having a functional group having an interaction with silica are mixed with each other in advance to prepare the modifying initiator, and the prepared modifying initiator is added into the polymerization system. Alternatively, the polymerization may be performed as follows: the alkali metal compound or the alkaline earth metal compound, and the compound having a functional group having an interaction with silica are added into the polymerization system, and are mixed with each other in the polymerization system to prepare the modifying initiator. Alternatively, a nitrogen-containing alkyllithium compound may be used. As a specific example of the nitrogen-containing alkyllithium compound, for example, a reaction product between 3-dimethylaminopropyllithium and isoprene may be used.

The randomizer may be used for the purpose of, for example, adjusting a vinyl bond content, which represents the content ratio of vinyl bonds (1,2-bond and 3,4-bond) in the polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. Those randomizers may be used alone or in combination thereof.

The organic solvent to be used for the polymerization only needs to be an organic solvent inert to the reaction, and for example, an aliphatic hydrocarbon, an alicyclic hydrocarbon, or an aromatic hydrocarbon may be used. Of those, a hydrocarbon having 3 to 8 carbon atoms is preferred, and specific examples thereof include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, and cyclohexene. The organic solvents may be used alone or in combination thereof.

When solution polymerization is used, the concentration of the monomers in the reaction solvent is preferably from 5 mass% to 50 mass%, more preferably from 10 mass% to 30 mass% from the viewpoint of maintaining a balance between productivity and ease of polymerization control. The temperature of the polymerization reaction is preferably from -20°C to 150°C, more preferably from 0°C to 120°C, particularly preferably from 20°C to 100°C. In addition, the polymerization reaction is preferably performed under a pressure sufficient for keeping the monomers substantially in a liquid phase. Such pressure may be obtained by a method involving, for example, pressurizing the inside of a reactor with a gas inert to the polymerization reaction. Through such polymerization reaction, a conjugated diene-based polymer having an active polymerization end may be obtained.

In the conjugated diene-based polymer having an active polymerization end, the vinyl bond content in the structural unit derived from the conjugated diene compound is preferably from 30 mol% to 65 mol%, more preferably from 33 mol% to 62 mol%, particularly preferably from 35 mol% to 60 mol%. When the vinyl bond content is less than 30 mol%, the grip characteristic tends to be excessively low, and when the vinyl bond content is more than 65 mol%, the wear resistance of the crosslinked polymer to be obtained tends to be degraded. Herein, the "vinyl bond content" is a value indicating the content ratio of a structural unit having a vinyl bond to all structural units derived from the conjugated diene compound in the conjugated diene-based polymer, and is a value measured by ¹H-NMR.

### <Modification Step>

Next, the conjugated diene-based polymer obtained by the above-mentioned polymerization reaction is subjected to a reaction between the active polymerization end of the polymer and the compound represented by any one of the following general formulae (1) to (3) (specific modifier). Through such step, the conjugated diene-based polymer (A) having an end modified with the specific modifier may be obtained. Such conjugated diene-based polymer (A) having an end modified with the specific modifier has an increased interaction with a filler at the end modification site, and hence improves the wet grip property and the low loss property, and also improves tensile strength and processability by virtue of the branching characteristic of an imine.

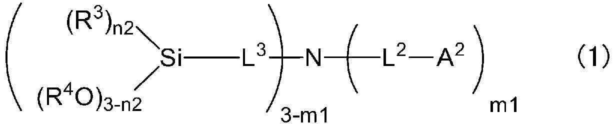

In the formula (1), A² represents a monovalent group bonded to L² via an imino group, an amide group, a (thio)carbonyl group, a (thio)carbonyloxy group, a sulfide, or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic halide, an imidazolyl group, or a group represented by the following formula (1a), L² and L³ each independently represent a single bond or a hydrocarbylene group having 1 to 20 carbon atoms, R³ and R⁴ each independently represent a hydrocarbyl group having 1 to 4 carbon atoms, n2 represents from 0 to 3, and m1 represents 0 or 1. 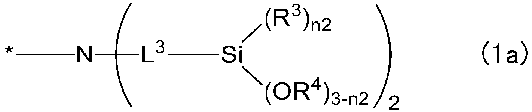 In the formula (1a), L³, R³, R⁴, and n2 are the same as in the formula (1), and "*" represents a site to be bonded to L².

In the formula (1), examples of the hydrocarbylene group having 1 to 20 carbon atoms represented by any one of L² and L³ include a linear or branched alkanediyl group having 1 to 20 carbon atoms, a cycloalkylene group having 3 to 20 carbon atoms, and an arylene group having 6 to 20 carbon atoms. In the formula (1), examples of the hydrocarbyl group having 1 to 4 carbon atoms represented by any one of R³ and R⁴ include a linear or branched alkyl group having 1 to 4 carbon atoms, and a cycloalkyl group having 3 or 4 carbon atoms.

Specific examples of the compound represented by the general formula (1) include N,N-bis(trimethoxysilylpropyl)aminopropyl-3-imidazole, N,N-bis(triethoxysilylpropyl)aminopropyl-1-imidazole, N,N-bis(trimethoxysilyl)aminopropylmethyldiethylsilane, N,N,N-tris(triethoxysilylpropyl)amine, and N,N,N',N'-tetrakis(3-triethoxysilylpropyl)-1,3-diaminopropane. 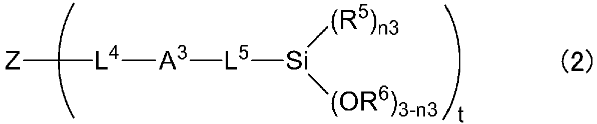 In the formula (2), A³s each independently represent an imino group, an amide group, a (thio)carbonyl group, a (thio)carbonyloxy group, a secondary amino group, or a tertiary amino group, Z represents a nitrogen atom-containing or -free t-valent group having 1 to 20 carbon atoms, L⁴ represents a single bond or a hydrocarbylene group having 1 to 20 carbon atoms, L⁵ represents a hydrocarbylene group having 1 to 20 carbon atoms, R⁵ and R⁶ each independently represent a hydrocarbyl group having 1 to 4 carbon atoms, n3 represents 0 or 1, and "t" represents 2 or 3.

In the formula (2), Z represents a divalent or trivalent group having 1 to 20 carbon atoms, which may contain a nitrogen atom, and preferably contains a nitrogen atom. In the formula (2), examples of the hydrocarbylene group having 1 to 20 carbon atoms represented by L⁴ and the hydrocarbylene group having 1 to 20 carbon atoms represented by L⁵ include a linear or branched alkanediyl group having 1 to 20 carbon atoms, a cycloalkylene group having 3 to 20 carbon atoms, and an arylene group having 6 to 20 carbon atoms. In the formula (2), examples of the hydrocarbyl group having 1 to 4 carbon atoms represented by any one of R⁵ and R⁶ include a linear or branched alkyl group having 1 to 4 carbon atoms, and a cycloalkyl group having 3 or 4 carbon atoms.

Specific examples of the compound represented by the general formula (2) include compounds represented by the following formulae (M-1) to (M-4).

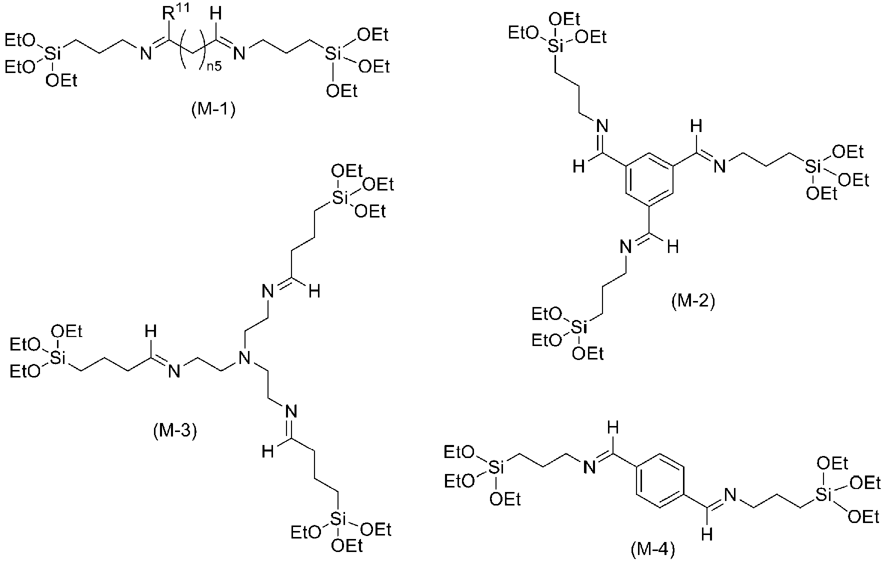

In the formula (M-1), R¹¹ represents a hydrogen atom or an alkyl group having 1 to 20 carbon atoms, and n5 represents an integer of from 1 to 10.

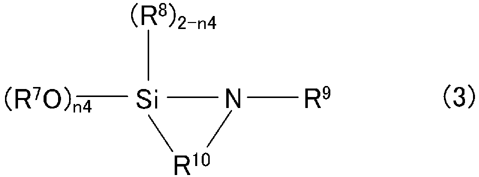

In the formula (3), R⁷ and R⁸ each independently represent a hydrocarbyl group having 1 to 20 carbon atoms, R⁹ represents a hydrocarbyl group having 1 to 20 carbon atoms, or a substituted alkyl group having 1 to 20 carbon atoms, at least one of a hydrogen atom or -CH₂- of the alkyl group being substituted with a group containing at least one kind of element selected from the group consisting of: silicon; nitrogen; phosphorus; oxygen; and sulfur, or represents an aromatic group having 6 to 20 carbon atoms, the aromatic group containing at least one kind of element selected from the group consisting of: nitrogen; phosphorus; oxygen; and sulfur, R¹⁰ represents an alkanediyl group having 1 to 20 carbon atoms, and n4 represents 1 or 2.

In the formula (3), examples of the hydrocarbyl group having 1 to 20 carbon atoms represented by any one of R⁷ and R⁸ include a linear or branched alkyl group having 1 to 20 carbon atoms, a cycloalkyl group having 3 to 20 carbon atoms, and an aryl group having 6 to 20 carbon atoms.

Specific examples of the compound represented by the general formula (3) include N-phenyl-2,2-dimethoxy-1-aza-2-silacyclopentane and N-(3-triethoxysilylpropyl)-2,2-dimethoxy-1-aza-2-silacyclopentane.

In the modification reaction of the conjugated diene-based polymer having an active polymerization end, the specific modifier may be used alone, but a modifier other than the specific modifier (hereinafter sometimes referred to as "other modifier") may be used together with the specific modifier. The other modifier is not particularly limited as long as the other modifier is a compound having a functional group having an interaction with a filler, and being capable of reacting with the active polymerization end of the polymer.

The above-mentioned modification reaction may be performed, for example, as a solution reaction. The solution reaction may be performed using a solution containing an unreacted monomer after the termination of the polymerization reaction, or may be performed after the conjugated diene-based polymer contained in the solution has been isolated and dissolved in an appropriate solvent, such as cyclohexane. In addition, the modification reaction may be performed using any of a batch system and a continuous system. In this case, a method of adding the modifier is not particularly limited, and examples thereof include a method involving adding the modifier in one portion, a method involving adding the modifier in divided portions, and a method involving continuously adding the modifier.

The use ratio of the specific modifier (when two or more kinds thereof are used, their total amount) is set to preferably 0.2 mol or more, more preferably 0.4 mol or more with respect to 1 mol of a metal atom to be involved in the polymerization reaction that the polymerization initiator has. When the use ratio is set to 0.2 mol or more, the modification reaction of the polymer end with the specific modifier can be caused to proceed sufficiently, and hence the interaction with a filler at the end modification site can be made sufficiently strong. In addition, in order to reduce the amount of unreacted substances in the solution after the modification reaction, the upper limit value of the use ratio of the specific modifier is set to preferably less than 1.5 mol, more preferably less than 1.2 mol with respect to 1 mol of the metal atom to be involved in the polymerization reaction that the polymerization initiator has.

When the specific modifier and the other modifier are used in combination in the modification reaction, the use ratio of the other modifier is set to preferably 30 mol% or less, more preferably 20 mol% or less, particularly preferably 10 mol% or less with respect to the total use ratio of the specific modifier and the other modifier from the viewpoint of causing the reaction between the conjugated diene-based polymer and the specific modifier to proceed sufficiently.

The temperature of the modification reaction is generally the same as the temperature of the polymerization reaction, and is set to preferably from -20°C to 150°C, more preferably from 0°C to 120°C, particularly preferably from 20°C to 100°C. When the temperature of the modification reaction is low, the viscosity of the conjugated diene-based polymer after the modification tends to be increased. Meanwhile, when the temperature of the modification reaction is high, the active end of the polymer is liable to be deactivated. The reaction time of the modification reaction is preferably from 1 minute to 5 hours, more preferably from 2 minutes to 1 hour.

The isolation of the conjugated diene-based polymer (A) contained in the reaction solution may be performed by, for example, a known solvent removal method, such as steam stripping, and a drying operation, such as heat treatment. The Mooney viscosity of the obtained conjugated diene-based polymer (A) may be adjusted by adding an extender oil or the like as required. This treatment can make the processability satisfactory. Examples of the extender oil include an aromatic oil, a naphthenic oil, and a paraffin oil. The blending amount of the extender oil only needs to be appropriately set in accordance with, for example, the monomers to be used for the polymerization, but is, for example, from 10 parts by mass to 50 parts by mass with respect to 100 parts by mass of the conjugated diene-based polymer.

Thus, the conjugated diene-based polymer (A) may be obtained. The conjugated diene-based polymer (A) can improve compatibility with a filler, and can provide a polymer composition improved in processability. The polymer composition containing such conjugated diene-based polymer (A) can be used to provide a tire (crosslinked polymer) that is excellent in low loss property as well as being excellent in, for example, heat build-up, tensile strength, wear resistance, low fuel consumption property, and wet grip property, which are required in an application such as an automobile tire.

The conjugated diene-based polymer (A) preferably has a structure derived from the compound represented by any one of the general formulae (1) to (3) at least one end of the polymer. The conjugated diene-based polymer (A) having such structure is preferred because, in the case of, for example, application to a tire application, the dispersibility of a filler, such as carbon black or silica, is further improved, and higher improving effects are exhibited on the low loss property and the wet grip property.

The weight average molecular weight (Mw) of the conjugated diene-based polymer (A) in terms of polystyrene measured by gel permeation chromatography (GPC) is preferably from 100,000 to 2,000,000. When the Mw is less than 100,000, the crosslinked polymer of the polymer composition according to this embodiment tends to be reduced in low loss property and wear resistance, and when the Mw is more than 2,000,000, the processability of the polymer composition tends to be reduced. The weight average molecular weight (Mw) of the conjugated diene-based polymer (A) to be obtained is more preferably from 150,000 to 1,500,000, still more preferably from 200,000 to 1,000,000.

The molecular weight distribution of the conjugated diene-based polymer (A), that is, the ratio between its weight average molecular weight (Mw) and number average molecular weight (Mn) (Mw/Mn) is preferably from 1.5 to 3.0, more preferably from 1.5 to 2.5, particularly preferably from 1.5 to 2.2. When the molecular weight distribution of the conjugated diene-based polymer (A) falls within the above-mentioned ranges, more excellent low loss property, wear resistance, wet grip performance, and mechanical characteristics are likely obtained.

### 1.2. Conjugated Diene-based Polymer Particles (B)

The polymer composition according to this embodiment contains the conjugated diene-based polymer particles (B). The incorporation of the conjugated diene-based polymer particles (B) improves the wear resistance and impact resilience of the crosslinked polymer (tire) to be obtained.

The conjugated diene-based polymer particles (B) are preferably crosslinked particles, and examples thereof include particles of at least one kind of polymer selected from: a rubber polymer (hereinafter sometimes referred to as "specific rubber polymer") selected from the group consisting of: an isoprene rubber; a butadiene rubber; a styrene-butadiene copolymer rubber; a styrene-isoprene copolymer rubber; a butadiene-isoprene copolymer rubber; a styrene-butadiene-isoprene copolymer rubber; a styrene-acrylonitrile-butadiene copolymer rubber; an acrylonitrile-butadiene copolymer rubber; an ethylene-α-olefin diene copolymer rubber; a chloroprene rubber; and a halogenated butyl rubber; and a graft polymer (hereinafter sometimes referred to as "specific rubber graft polymer") obtained by graft-polymerizing a conjugated diene compound (hereinafter sometimes referred to as "conjugated diene-based monomer") and/or a styrene compound (hereinafter sometimes referred to as "styrene-based monomer") onto the specific rubber polymer.

Examples of the specific rubber graft polymer include: a graft polymer having graft-polymerized thereon a conjugated diene-based monomer; a graft polymer having graft-polymerized thereon a styrene-based monomer; and a graft polymer having graft-polymerized thereon a conjugated diene-based monomer and a styrene-based monomer.

Of those, a butadiene rubber and a styrene-butadiene copolymer rubber are preferred from the viewpoint of blending processability.

The number average particle diameter of the conjugated diene-based polymer particles (B) is preferably from 10 nm to 800 nm, more preferably from 30 nm to 700 nm. Herein, the number average particle diameter of the conjugated diene-based polymer particles (B) is a value measured by a light scattering method. When the number average particle diameter of the conjugated diene-based polymer particles (B) falls within the above-mentioned ranges, the wear resistance and impact resilience of the crosslinked polymer (tire) to be obtained can also be highly well balanced.

Such conjugated diene-based polymer particles (B) may be produced by an emulsion polymerization method or a suspension polymerization method.

Specifically, when the conjugated diene-based polymer particles (B) are formed of the specific rubber polymer, the rubber particles formed of the specific rubber polymer may be obtained by subjecting monomers for obtaining the specific rubber polymer (hereinafter sometimes referred to as "monomers for forming rubber particles") to a polymerization reaction in a medium using, as required, a polymerization initiator, an emulsifier, and a suspension stabilizer.

In addition, when the conjugated diene-based polymer particles (B) are formed of the specific graft polymer, the rubber particles formed of the graft polymer may be obtained by graft-polymerizing a conjugated diene-based monomer and/or a styrene-based monomer onto the specific rubber polymer obtained by the emulsion polymerization method or the suspension polymerization method.

Appropriate compounds in accordance with the kind of the polymer to be formed are used as the monomers for forming rubber particles, but in order to form a crosslinked structure, for example, a polyfunctional compound having a polymerizable unsaturated group (hereinafter sometimes referred to as "compound for forming a crosslinked structure") is used.

Examples of the compound for forming a crosslinked structure include divinylbenzene, diallyl phthalate, ethylene glycol di(meth)acrylate, diethylene glycol di(meth)acrylate, propylene glycol di(meth)acrylate, propanediol di(meth)acrylate, butanediol di(meth)acrylate, hexanediol di(meth)acrylate, trimethylolpropane di(meth)acrylate, trimethylolpropane tri(meth)acrylate, pentaerythritol tri(meth)acrylate, pentaerythritol tetra(meth)acrylate, hydroquinone, polyethylene glycol di(meth)acrylate, and polypropylene glycol di(meth)acrylate. Of those, from the viewpoint of versatility, that is, the viewpoint that cost can be reduced, divinylbenzene and trimethylolpropane trimethacrylate are preferred.

The ratio of the compound for forming a crosslinked structure in the monomers for forming rubber particles is preferably from 0.5 part by mass to 5 parts by mass with respect to 100 parts by mass in total of the monomers to be subjected to the polymerization (monomers for forming rubber particles). When the ratio of the compound for forming a crosslinked structure falls within the above-mentioned range, the impact resilience of the crosslinked polymer (tire) to be obtained becomes satisfactory in some cases.

In addition, a functional group-containing compound (hereinafter sometimes referred to as "compound for improving dispersibility") may be used in the monomers for forming rubber particles for the purpose of making the dispersibility of the conjugated diene-based polymer particles (B) in a rubber composition satisfactory. That is, the conjugated diene-based polymer particles (B) may each have a structural unit derived from a functional group-containing compound.

Specific examples of the compound for improving dispersibility include hydroxyethyl methacrylate, hydroxypropyl methacrylate, hydroxybutyl methacrylate, ethylene glycol dimethacrylate, trimethylolpropane trimethacrylate, pentaerythritol tetramethacrylate, tert-butoxydimethylsilylstyrene, and isopropoxydimethylsilylstyrene. Of those, from the viewpoint of rolling resistance in the crosslinked polymer (tire) to be obtained, hydroxyethyl methacrylate is preferred. Ethylene glycol dimethacrylate, trimethylolpropane trimethacrylate, and pentaerythritol tetramethacrylate each also act as the above-mentioned compound for forming a crosslinked structure.

The use ratio of the compound for improving dispersibility is preferably from 0.5 part by mass to 10 parts by mass with respect to 100 parts by mass in total of the monomers to be subjected to the polymerization (monomers for forming rubber particles). When the use ratio of the compound for improving dispersibility falls within the above-mentioned range, the low loss property and impact resilience of the crosslinked polymer (tire) to be obtained can be highly well balanced.

In the emulsion polymerization method, a radical polymerization initiator is used as the polymerization initiator. As the radical polymerization initiator, there may be used, for example, an organic peroxide, such as benzoyl peroxide, lauroyl peroxide, tert-butyl hydroperoxide, cumene hydroperoxide, p-menthane hydroperoxide, di-tert-butyl peroxide, or dicumyl peroxide, a diazo compound, such as azobisisobutyronitrile, an inorganic peroxide, such as potassium persulfate, and a redox-based catalyst, such as a combination of any of those peroxides and ferrous sulfate.

In addition, in the emulsion polymerization method, for example, any of chain transfer agents including mercaptans, such as tert-dodecyl mercaptan and n-dodecyl mercaptan, carbon tetrachloride, thioglycols, diterpenes, terpinolene, and γ-terpinenes may be used in combination with the polymerization initiator.

As the emulsifier to be used in the emulsion polymerization method, there may be used a fluorine-based surfactant as well as an anionic surfactant, a nonionic surfactant, a cationic surfactant, and an amphoteric surfactant. The emulsifiers may be used alone or in combination thereof.

Examples of the suspension stabilizer to be used in the suspension polymerization method include polyvinyl alcohol, sodium polyacrylate, and hydroxyethyl cellulose. The suspension stabilizers may be used alone or in combination thereof.

The content ratio of the conjugated diene-based polymer particles (B) in the polymer composition according to this embodiment is preferably from 1 mass% to 50 mass%, more preferably from 3 mass% to 40 mass%, particularly preferably from 5 mass% to 30 mass% with respect to 100 mass% of all conjugated diene-based polymer components contained in the polymer composition. When the content ratio of the conjugated diene-based polymer particles (B) falls within the above-mentioned ranges, the impact resilience of the crosslinked polymer (tire) to be obtained is likely improved.

### 1.3. Other Components

The polymer composition according to this embodiment may contain an optional component as required in addition to the conjugated diene-based polymer (A) and the conjugated diene-based polymer particles (B), which are essential components.

The polymer components may contain another polymer component as an optional component other than the conjugated diene-based polymer (A) and the conjugated diene-based polymer particles (B), which are essential components. Examples thereof include a natural rubber, a butadiene rubber, a butyl rubber, a synthetic isoprene rubber, a styrene-butadiene copolymer rubber, an ethylene-α-olefin copolymer rubber, an ethylene-α-olefin-diene copolymer rubber, an acrylonitrile-butadiene copolymer rubber, a chloroprene rubber, and a halogenated butyl rubber, and mixtures thereof. Of those, a natural rubber or a butadiene rubber is preferably contained for the reason that the crosslinked polymer (tire) to be obtained can achieve a highly balanced low loss property and wet grip property while maintaining wear resistance. The use ratio of the other polymer component is preferably from 10 mass% to 45 mass% in 100 mass% of the polymer components.

Examples of the optional component other than the polymer components include a filler, such as silica or carbon black, a silane coupling agent, an acidic compound, a crosslinking agent, such as sulfur, an extender oil, an anti-aging agent, a vulcanization aid, such as zinc oxide, a vulcanization accelerator, and a wax.

### <Silica>

As the silica, silica that is generally used as a filler may be used. In order that the low loss property and impact resilience of the crosslinked polymer (tire) to be obtained may be highly well balanced, a synthetic silicic acid having a primary particle diameter of 50 nm or less is preferred.

The use ratio of the silica is preferably from 20 parts by mass to 100 parts by mass with respect to 100 parts by mass of the polymer components. When the content ratio of the silica falls within the above-mentioned range, the low loss property and impact resilience of the crosslinked polymer (tire) to be obtained can be highly well balanced.

### <Carbon Black>

As the carbon black, carbon black that is generally used as a filler may be used. Specific examples of the carbon black include GPF, FEF, HAF, ISAF, and SAF. Of those, ISAF, SAF, or HAF is preferred, and ISAF is more preferred.

The use ratio of the carbon black is preferably from 0.5 part by mass to 100 parts by mass, more preferably from 1 part by mass to 50 parts by mass with respect to 100 parts by mass of the polymer components.

### <Silane Coupling Agent>

Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, and 3-octanoylthio-1-propyltriethoxysilane. Those compounds may be used alone or in combination thereof. In addition, of those, from the viewpoint of, for example, an improving effect on a reinforcing property, bis(3-triethoxysilylpropyl)trisulfide, bis(3-triethoxysilylpropyl)disulfide, and 3-trimethoxysilylpropylbenzothiazolyl tetrasulfide are preferred.

The use ratio of the silane coupling agent is preferably from 0.5 part by mass to 20 parts by mass with respect to 100 parts by mass of the filler component. When the use ratio of the silane coupling agent falls within the above-mentioned range, a sufficient reinforcing property and fracture resistance characteristic can be imparted to the crosslinked polymer to be formed from the polymer composition, and the wear resistance of the crosslinked polymer can be improved in some cases.

### <Acidic Compound>

Saturated fatty acids having 12 to 24 carbon atoms and metal salts thereof are each suitably used as the acidic compound. Specific examples of the acidic compound include lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, and calcium salts and zinc salts of these saturated fatty acids. Those acidic compounds may be used alone or in combination thereof. Of those, stearic acid is preferred. The use ratio of the acidic compound is preferably from 0.3 part by mass to 15 parts by mass with respect to 100 parts by mass of the polymer components.

### <Crosslinking Agent>

Examples of the crosslinking agent include sulfur, a sulfur halide, an organic peroxide, a quinone dioxime, an organic polyamine compound, and an alkylphenol resin having a methylol group. Of those, sulfur is generally used as the crosslinking agent. The use ratio of the crosslinking agent is preferably from 0.1 part by mass to 10 parts by mass, more preferably from 0.5 part by mass to 5 parts by mass with respect to 100 parts by mass of the polymer components.

### <Other Additives>

Examples of the extender oil include an aromatic oil, a naphthenic oil, and a paraffin oil. The use ratio of the extender oil is preferably from 0 parts by mass to 50 parts by mass with respect to 100 parts by mass of the polymer components.

Examples of the anti-aging agent include N-(1,3-dimethylbutyl)-N'-phenyl-p-phenylenediamine and N-phenyl-N'-isopropyl-p-phenylenediamine. The use ratio of the anti-aging agent is preferably from 0.5 part by mass to 5 parts by mass with respect to 100 parts by mass of the polymer components.

An example of the vulcanization aid is zinc oxide. The use ratio of the vulcanization aid is preferably from 1 part by mass to 5 parts by mass with respect to 100 parts by mass of the polymer components.

Examples of the vulcanization accelerator include a guanidine-based compound, an aldehyde-amine-based compound, an aldehyde-ammonia-based compound, a thiazole-based compound, a sulfenamide-based compound, a thiourea-based compound, a thiuram-based compound, a dithiocarbamate-based compound, and a xanthate-based compound. Preferred specific examples of the vulcanization accelerator include sulfenamide-based vulcanization accelerators, such as N-cyclohexyl-2-benzothiazyl sulfenamide (CBS) and N-tetra-butyl-2-benzothiazyl sulfenamide (TBBS). The use ratio of the vulcanization accelerator is appropriately decided in consideration of the kind and use ratio of a basic compound, but is preferably from 0.5 part by mass to 5 parts by mass with respect to 100 parts by mass of the polymer components.

### 1.4. Production Method for Polymer Composition

The polymer composition according to this embodiment may be prepared by kneading the above-mentioned components using, for example, a kneading machine, such as Plastomill, a Banbury mixer, a roll, or an internal mixer. For example, the polymer composition is preferably prepared by the following method.

### <First-stage Kneading>

In first-stage kneading, a filler and a silane coupling agent, which are added as required, are preferably kneaded together with the conjugated diene-based polymer (A) and the conjugated diene-based polymer particles (B). In addition, in the first-stage kneading, another polymer, an extender oil, an anti-aging agent, and the like are also kneaded as required. In addition, in the first-stage kneading, an acidic compound, which is preferably kneaded in second-stage kneading, may also be kneaded.

When the filler is subjected to the first-stage kneading, the dispersibility thereof likely becomes satisfactory, and the low fuel consumption performance of the tire (crosslinked polymer) to be formed from the polymer composition to be obtained is improved in some cases.

In addition, when the silane coupling agent is subjected to the first-stage kneading, it is preferred that, first, the conjugated diene-based polymer (A), the conjugated diene-based polymer particles (B), the other polymer, and as required, the filler be kneaded, and then the silane coupling agent be added (post-added), followed by further kneading.

When the silane coupling agent is post-added in the first-stage kneading, the polymer composition to be obtained becomes more excellent in processability, and the crosslinked polymer to be formed from the polymer composition has a more excellent low loss property. In addition, when the polymer composition contains silica as the filler, the dispersibility of the silica can be made more satisfactory.

When the silane coupling agent is post-added, the addition timing of the silane coupling agent is appropriately decided in accordance with, for example, the kind of the silica, the use ratio of the silica, and kneading conditions, in consideration of, for example, the use ratios of the conjugated diene-based polymer (A), the conjugated diene-based polymer particles (B), and the other polymer.

In addition, when the silane coupling agent is post-added, it is preferred that the conjugated diene-based polymer (A), the conjugated diene-based polymer particles (B), and the other polymer be blended and kneaded over from 0.5 minute to 10 minutes, and then the silane coupling agent be added thereto and kneaded therewith over from 0.5 minute to 10 minutes.

Examples of the kneading machine to be used for the first-stage kneading include open or closed kneading machines, such as Plastomill, a Banbury mixer, a roll, and an internal mixer. In addition, in the first-stage kneading, a kneading temperature is set to from 30°C to 180°C, preferably from 50°C to 160°C.

In addition, the case of subjecting the silane coupling agent to the first-stage kneading is not limited to the technique involving post-adding and kneading the silane coupling agent, and a kneaded product containing the silane coupling agent may be obtained by a technique involving simultaneously kneading the silane coupling agent together with all the other components to be subjected to the first-stage kneading. In addition, there may be adopted a method involving producing a masterbatch having kneaded therein the conjugated diene-based polymer (A), the conjugated diene-based polymer particles (B), the silica serving as the filler, and the silane coupling agent, and then adding the other polymer and additives.

### <Second-stage Kneading>

The second-stage kneading is a step including adding at least a crosslinking agent to the kneaded product obtained in the first-stage kneading, and kneading the kneaded product and the crosslinking agent to provide the polymer composition. In the second-stage kneading, an acidic compound is preferably kneaded with the kneaded product obtained in the first-stage kneading and the crosslinking agent. In addition, in the second-stage kneading, zinc oxide and a vulcanization accelerator are also kneaded as required. In the second-stage kneading, the polymer composition is generally obtained by a technique involving simultaneously kneading all the components to be subjected to the second-stage kneading (specifically, the kneaded product obtained in the first-stage kneading, the crosslinking agent, and other components to be subjected thereto as required, such as the acidic compound, zinc oxide, and the vulcanization accelerator).

When the acidic compound is subjected to the second-stage kneading, the polymer composition to be obtained becomes more excellent in processability, and in addition, the crosslinked polymer to be formed from the polymer composition has a more excellent low loss property.

In the second-stage kneading, the kneading machine used in the first-stage kneading is used. In addition, in the second-stage kneading, a kneading temperature is set to from 30°C to 130°C, preferably from 50°C to 110°C.

The polymer composition obtained by the production method as described above is an unvulcanized polymer composition, and forms a crosslinked polymer by, for example, being subjected to crosslinking treatment, such as vulcanization.

### 1.5. Applications

A crosslinked polymer formed from the polymer composition according to this embodiment is suitably used in a tire, specifically, the tread of a tire. A tire formed from the polymer composition according to this embodiment obtains high strength at its tread, and also obtains a desired shape at its tread, and hence obtains excellent performance. In addition, the crosslinked polymer formed from the polymer composition according to this embodiment may also be used as, for example, a tire member other than the tread, a vibration-proof rubber, a fender, a belt, a hose, and other industrial products.

### 2. Examples

Specific Examples of the invention are described below, but the invention is by no means limited to these Examples. The term "%" in Production Examples, Examples, and Comparative Examples below is by mass, unless otherwise stated.

### 2.1. Production Examples and Physical Property Measurement of Conjugated Diene-based Polymer (A)

### <Production Example 1>

An autoclave reactor having an internal volume of 5 liters, which had been purged with nitrogen, was loaded with 2,500 g of cyclohexane, 50 g of tetrahydrofuran serving as a vinyl group content-adjusting agent (randomizer), and 125 g of styrene and 365 g of 1,3-butadiene serving as monomers. After the temperature of the contents of the reactor had been adjusted to 10°C, 5.20 mmol of n-butyllithium was added as a polymerization initiator to initiate polymerization. The polymerization was performed under a thermally insulated condition, and the highest temperature reached 85°C.

At the time point when a polymerization conversion rate of 99% was achieved (after a lapse of 25 minutes from the initiation of the polymerization), 10 g of 1,3-butadiene was added over 1 minute. After that, 0.575 mmol of N,N,N',N'-tetrakis(3-triethoxysilylpropyl)-1,3-diaminopropane was added as a modifier, and the mixture was subjected to a reaction for 15 minutes.

To the resultant polymer solution containing a modified conjugated diene-based copolymer, 4.40 g of 2,6-di-tert-butyl-p-cresol was added. Then, the solvent was removed by steam stripping, and the residue was dried with a heat roll controlled to a temperature of 110°C to provide a modified conjugated diene-based copolymer (hereinafter sometimes referred to as "SBR-1").

### <Production Example 2>

A modified conjugated diene-based copolymer (hereinafter sometimes referred to as "SBR-2") was obtained by performing the same operations as in Production Example 1 except that 1.15 mmol of N-(3-imidazolylpropyl)-N,N-bis(3-trimethoxysilylpropyl)amine was added in place of N,N,N',N'-tetrakis(3-triethoxysilylpropyl)-1,3-diaminopropane.

### <Production Example 3>

A conjugated diene-based copolymer (hereinafter sometimes referred to as "SBR-3 ") was obtained by performing the same operations as in Production Example 1 except that 2.30 mmol of N,N-dimethylaminopropyltrimethoxysilane was added in place of N,N,N',N'-tetrakis(3-triethoxysilylpropyl)-1,3-diaminopropane.

### <Measurement of Number Average Molecular Weight (Mn) and Weight Average Molecular Weight (Mw)>

For each polymer produced above, a number average molecular weight (Mn) and a weight average molecular weight (Mw) were calculated in terms of polystyrene through use of gel permeation chromatography (GPC) ("HLC-8120" manufactured by Tosoh Corporation) from a retention time corresponding to the apex of the maximum peak of a GPC curve obtained under the following GPC conditions.

### (GPC Conditions)

Column: product name "GMHXL" (manufactured by Tosoh Corporation)×2
Column temperature: 40°C
Mobile phase: tetrahydrofuran
Flow rate: 1.0 ml/min
Sample concentration: 10 mg/20 ml

### <Measurement of Vinyl Content and Bound Styrene Content>

·Vinyl content (%): measured by 400 MHz ¹H-NMR measurement.
·Bound styrene content (%): measured by 400 MHz ¹H-NMR measurement. The bound styrene content is a parameter corresponding to an aromatic vinyl content.

### 2.2. Production Examples of Conjugated Diene-based Polymer Particles (B)

### <Production Example 1>

First, a vessel for polymerization was loaded with 200 parts by mass of water and 4.5 parts by mass of rosin acid soap as well as the following monomers: 63 parts by mass of 1,3-butadiene, 35 parts by mass of styrene, and 2 parts by mass of divinylbenzene serving as a compound for forming a crosslinked structure. After the temperature of the vessel for polymerization had been adjusted to 5°C, as a radical polymerization initiator, 0.1 part by mass of hydroperoxymethane, 0.07 part by mass of sodium ethylenediaminetetraacetate, 0.05 part by mass of ferrous sulfate heptahydrate, and 0.15 part by mass of sodium formaldehyde sulfoxylate were added, and polymerization was performed over 12 hours to provide a polymer particle dispersion containing polymer particles formed of a styrene-butadiene copolymer.

Then, the resultant polymer particle dispersion was coagulated with sulfuric acid and sodium chloride to give crumbs, which were then dried with a hot-air dryer to provide conjugated diene-based polymer particles having an average particle diameter of 200 nm (hereinafter sometimes referred to as "polymer particles (B1)").

### <Production Example 2>

Conjugated diene-based polymer particles that were formed of a styrene-butadiene copolymer and had an average particle diameter of 180 nm (hereinafter sometimes referred to as "polymer particles (B2)") were obtained by the same technique as in Production Example 1 of the polymer particles (B1) except that, in Production Example 1 described above, 60 parts by mass of 1,3-butadiene, 33 parts by mass of styrene, 2 parts by mass of divinylbenzene serving as a compound for forming a crosslinked structure, and 5 parts by mass of hydroxyethyl methacrylate serving as a compound for improving dispersibility were used as the monomers.

### <Production Example 3>

Conjugated diene-based polymer particles that were formed of a styrene-butadiene copolymer and had an average particle diameter of 200 nm (hereinafter sometimes referred to as "polymer particles (B3)") were obtained by the same technique as in Production Example 1 of the polymer particles (B1) except that, in Production Example 1 described above, 60 parts by mass of 1,3-butadiene, 33 parts by mass of styrene, 2 parts by mass of trimethylolpropane trimethacrylate serving as a compound for forming a crosslinked structure and as a compound for improving dispersibility, and 5 parts by mass of hydroxyethyl methacrylate serving as a compound for improving dispersibility were used as the monomers.

### <Production Example 4>

Conjugated diene-based polymer particles that were formed of a butadiene rubber and had an average particle diameter of 200 nm (hereinafter sometimes referred to as "polymer particles (B4)") were obtained by the same technique as in Production Example 1 of the polymer particles (B1) except that, in Production Example 1 described above, 100 parts by mass of 1,3-butadiene, 2 parts by mass of divinylbenzene serving as a compound for forming a crosslinked structure, and 5 parts by mass of hydroxyethyl methacrylate serving as a compound for improving dispersibility were used as the monomers.

### 2.3. Examples 1 to 6 and Comparative Examples 1 to 4

### 2.3.1. Production of Polymer Composition and Crosslinked Polymer

Respective components were blended according to blending formulations shown in Table 3 below, and were kneaded to produce polymer compositions. The kneading was performed by the following method.

Through use of Plastomill (inner capacity: 250 cc) with a temperature control device, as first-stage kneading, polymer components shown in Table 3 below, silica, an extender oil, carbon black, a silane coupling agent, stearic acid, an anti-aging agent, and zinc oxide were kneaded under the conditions of a filling ratio of 72% and a rotational speed of 60 rpm. Then, as second-stage kneading, after the kneaded product obtained above had been cooled to room temperature, sulfur and vulcanization accelerators were kneaded therewith to provide polymer compositions of Examples 1 to 6 and Comparative Examples 1 to 4.

Next, each of the resultant polymer compositions was molded and vulcanized with a vulcanization press at 160°C for a predetermined period of time to provide each crosslinked polymer having a predetermined shape to be subjected to evaluation tests described below.

### 2.3.2. Evaluation of Crosslinked Polymer

Each resultant crosslinked polymer was subjected to the following evaluation tests. The results are shown in Table 3 below.

### <Impact Resilience>

Measurement was performed using a tripso-type impact resilience test (manufactured by Toyo Seiki Seisaku-sho, Ltd.) under the condition of 50°C. Table 3 below shows an index with respect to the value of the crosslinked polymer according to Comparative Example 1 being defined as 100, and a higher numerical value for the index indicates larger and more satisfactory impact resilience.

### <Wet Grip Performance (0°C tanδ)>

Through use of a dynamic spectrometer (manufactured by Rheometrics, USA), measurement was performed under the conditions of a tensile dynamic strain of 0.14%, an angular velocity of 100 radians per second, and a temperature of 0°C. Table 3 below shows an index with respect to the value of the crosslinked polymer according to Comparative Example 1 being defined as 100, and a higher numerical value for the index indicates larger and more satisfactory wet skid resistance.

### <Low Hysteresis Loss Performance (50°C tanδ)>

Through use of a dynamic spectrometer (manufactured by Rheometrics, USA), measurement was performed under the conditions of a tensile dynamic strain of 0.7%, an angular velocity of 100 radians per second, and a temperature of 50°C. Table 3 below shows an index with respect to the value of the crosslinked polymer according to Comparative Example 1 being defined as 100, and a higher numerical value for the index indicates a larger and more satisfactory low hysteresis loss property.

### <Tensile Strength>

Each crosslinked polymer obtained above was used as a sample for measurement and measured for its 300% modulus (M300) in accordance with JIS K6251:2010. Table 3 below shows an index with respect to the value of the crosslinked polymer according to Comparative Example 1 being defined as 100, and a higher numerical value for the index indicates higher and more satisfactory tensile strength.

### <Processability (Blend Mooney Viscosity)>

Each polymer composition before vulcanization was used as a sample for measurement and measured for its Mooney viscosity in conformity with JIS K6300-1:2013 using an L rotor under the conditions of 1 minute of preheating, a rotor operation time of 4 minutes, and a temperature of 100°C. Table 3 below shows an index with respect to the value of the polymer composition according to Comparative Example 1 being defined as 100, and a higher numerical value for the index indicates more satisfactory processability.

### 2.4. Evaluation Results

Table 1 below shows the physical property values of the conjugated diene-based polymers synthesized above. Table 2 below shows the compounds used for the production of the conjugated diene-based polymer particles synthesized above and their use ratios. Table 3 below shows the compositions and evaluation results of the polymer compositions.

**Table 1**

| Kind of polymer | SBR-1 | SBR-2 | SBR-3 |
|---|---|---|---|
| Bound styrene content (%) | 32 | 32 | 32 |
| Vinyl content (%) | 55 | 55 | 55 |
| Weight average molecular weight (Mw) (×10⁴) | 20.3 | 20.5 | 19.9 |
| Number average molecular weight (Mn) (×10⁴) | 19.9 | 20.2 | 19.5 |

**Table 2**

| Polymer particle No. | B1 | B2 | B3 | B4 |
|---|---|---|---|---|
| Water (part(s) by mass) | 200 | 200 | 200 | 200 |
| 1,3-Butadiene (part(s) by mass) | 63 | 60 | 60 | 100 |
| Styrene (part(s) by mass) | 35 | 33 | 33 | - |
| Divinylbenzene (part(s) by mass) | 2 | 2 | - | 2 |
| Trimethylolpropane trimethacrylate (part(s) by mass) | - | - | 2 | - |
| Hydroxyethyl methacrylate (part(s) by mass) | - | 5 | 5 | 5 |
| Rosin acid soap (part(s) by mass) | 4.5 | 4.5 | 4.5 | 4.5 |
| Hydroperoxymethane (part(s) by mass) | 0.1 | 0.1 | 0.1 | 0.1 |
| Sodium ethylenediaminetetraacetate (part(s) by mass) | 0.07 | 0.07 | 0.07 | 0.07 |
| Ferrous sulfate heptahydrate (part(s) by mass) | 0.05 | 0.05 | 0.05 | 0.05 |
| Sodium formaldehyde sulfoxylate (part(s) by mass) | 0.15 | 0.15 | 0.15 | 0.15 |

**Table 3**

| | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| | (A) Conjugated diene-based polymer | SBR-1 (part(s) by mass) | | | | | 80 | 80 | | | | 80 |
| | | SBR-2 (part(s) by mass) | 80 | 80 | 80 | 80 | | | | | 80 | |
| | Other diene-based polymer | SBR-3 (part(s) by mass) | | | | | | | 80 | 80 | | |
| | (B) Conjugated diene-based polymer particles | Polymer particles (B1) (part(s) by mass) | 20 | | | | 20 | | 20 | | | |
| | | Polymer particles (B2) (part(s) by mass) | | 20 | | | | 20 | | | | |
| | | Polymer particles (B3) (part(s) by mass) | | | 20 | | | | | | | |
| Composition of polymer composition | | Polymer particles (B4) (part(s) by mass) | | | | 20 | | | | | | |
| | Other polymer | BR (part(s) by mass) | | | | | | | | 20 | 20 | 20 |
| | Silica (part(s) by mass) | | 84 | 84 | 84 | 84 | 84 | 84 | 84 | 84 | 84 | 84 |
| | Extender oil (part(s) by mass) | | 45 | 45 | 45 | 45 | 45 | 45 | 45 | 45 | 45 | 45 |
| | Carbon black (part(s) by mass) | | 6.7 | 6.7 | 6.7 | 6.7 | 6.7 | 6.7 | 6.7 | 6.7 | 6.7 | 6.7 |
| | Silane coupling agent (part(s) by mass) | | 10 | 10 | 10 | 10 | 10 | 10 | 10 | 10 | 10 | 10 |
| | Stearic acid (part(s) by mass) | | 2.4 | 2.4 | 2.4 | 2.4 | 2.4 | 2.4 | 2.4 | 2.4 | 2.4 | 2.4 |
| | Anti-aging agent (part(s) by mass) | | 1.2 | 1.2 | 1.2 | 1.2 | 1.2 | 1.2 | 1.2 | 1.2 | 1.2 | 1.2 |
| | Zinc oxide (part(s) by mass) | | 3.6 | 3.6 | 3.6 | 3.6 | 3.6 | 3.6 | 3.6 | 3.6 | 3.6 | 3.6 |
| | Vulcanization accelerator CZ (part(s) by mass) | | 1.8 | 1.8 | 1.8 | 1.8 | 1.8 | 1.8 | 1.8 | 1.8 | 1.8 | 1.8 |
| | Vulcanization accelerator D (part(s) by mass) | | 1.8 | 1.8 | 1.8 | 1.8 | 1.8 | 1.8 | 1.8 | 1.8 | 1.8 | 1.8 |
| | Sulfur (part(s) by mass) | | 1.8 | 1.8 | 1.8 | 1.8 | 1.8 | 1.8 | 1.8 | 1.8 | 1.8 | 1.8 |
| Evaluation test | Impact resilience | | 116 | 118 | 117 | 113 | 120 | 122 | 100 | 92 | 90 | 93 |
| | Wet grip performance (0°C tanδ) | | 120 | 127 | 122 | 128 | 122 | 124 | 100 | 93 | 95 | 97 |
| | Low hysteresis loss performance (50°C tanδ) | | 119 | 126 | 128 | 136 | 125 | 123 | 100 | 93 | 96 | 100 |
| | Tensile strength | | 105 | 108 | 110 | 114 | 106 | 109 | 100 | 84 | 89 | 92 |
| | Processability index | | 111 | 115 | 120 | 116 | 106 | 118 | 100 | 96 | 98 | 100 |

In Table 3 above, a numerical value for each component in the composition of a polymer composition represents parts by mass. The following products were respectively used as the materials shown in Table 3 above.
·BR: manufactured by JSR Corporation, product name "BR-01", a non-particle polybutadiene rubber
·Silica: manufactured by Tosoh Silica Corporation, product name "Nipsil AQ", average primary particle diameter: 15 nm
·Extender oil: manufactured by Sankyo Yuka Kogyo K.K., product name "SNH46"
·Carbon black: manufactured by Mitsubishi Chemical Corporation, product name "DIABLACK N339"
·Silane coupling agent: manufactured by Evonik, product name "Si-69", bis(triethoxysilylpropyl)tetrasulfide
·Stearic acid: manufactured by NOF Corporation, product name "STEARIC ACID CAMELLIA"
·Anti-aging agent: manufactured by Ouchi Shinko Chemical Industrial Co., Ltd., product name "NOCRAC 810NA", N-phenyl-N'-isopropyl-p-phenylenediamine
·Zinc Oxide: manufactured by Mitsui Mining & Smelting Co., Ltd., product name "Zinc oxide No. 1"
·Vulcanization accelerator CZ: manufactured by Ouchi Shinko Chemical Industrial Co., Ltd., product name "NOCCELER CZ", N-cyclohexyl-2-benzothiazolylsulfenamide
·Vulcanization accelerator D: manufactured by Ouchi Shinko Chemical Industrial Co., Ltd., product name "NOCCELER D", 1,3-diphenylguanidine
·Sulfur: manufactured by Tsurumi Chemical Industry Co., Ltd., product name "Golden Flower Oil Treated Sulfur Powder"

It is found from the results of Table 3 above that the polymer compositions according to Examples 1 to 6 each containing the conjugated diene-based polymer (A) and the conjugated diene-based polymer particles (B) have each been able to improve the tensile strength and the processability by virtue of the branching characteristic of an imine as well as the impact resilience, the wet grip property, and the low hysteresis loss property as compared to the polymer composition according to Comparative Example 1.

## Claims

1. A polymer composition comprising:
(A) a conjugated diene-based polymer that is a reaction product between a polymer having an active polymerization end, the polymer being obtained by polymerizing a conjugated diene compound, or a conjugated diene compound and an aromatic vinyl compound, in the presence of an alkali metal compound or an alkaline earth metal compound, and a compound represented by any one of the following general formulae (1) to (3); and
(B) conjugated diene-based polymer particles: 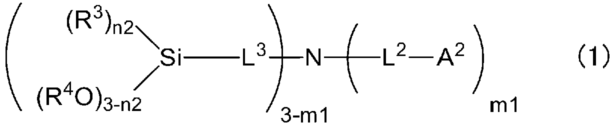 in the formula (1), A² represents a monovalent group bonded to L² via an imino group, an amide group, a (thio)carbonyl group, a (thio)carbonyloxy group, a sulfide, or a polysulfide, or represents a protected primary amino group, a protected secondary amino group, a tertiary amino group, a nitrile group, a pyridyl group, a (thio)epoxy group, a (thio)isocyanate group, a (thio)formyl group, a (thio)carboxylic acid ester, a metal salt of a (thio)carboxylic acid ester, a carboxylic halide, an imidazolyl group, or a group represented by the following formula (1a), L² and L³ each independently represent a single bond or a hydrocarbylene group having 1 to 20 carbon atoms, R³ and R⁴ each independently represent a hydrocarbyl group having 1 to 4 carbon atoms, n2 represents from 0 to 3, and m1 represents 0 or 1; 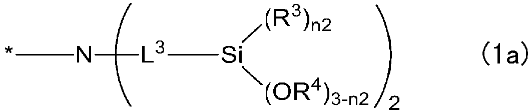 in the formula (1a), L³, R³, R⁴, and n2 are the same as in the formula (1), and "*" represents a site to be bonded to L²; 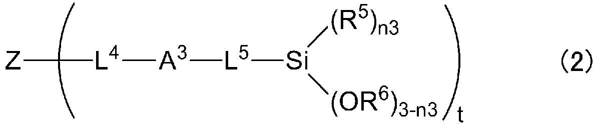 in the formula (2), A³s each independently represent an imino group, an amide group, a (thio)carbonyl group, a (thio)carbonyloxy group, a secondary amino group, or a tertiary amino group, Z represents a nitrogen atom-containing or -free t-valent group having 1 to 20 carbon atoms, L⁴ represents a single bond or a hydrocarbylene group having 1 to 20 carbon atoms, L⁵ represents a hydrocarbylene group having 1 to 20 carbon atoms, R⁵ and R⁶ each independently represent a hydrocarbyl group having 1 to 4 carbon atoms, n3 represents 0 or 1, and "t" represents 2 or 3; and 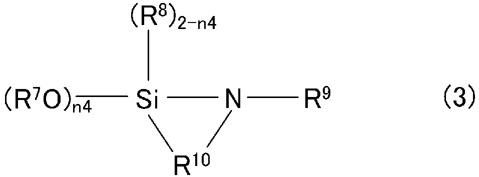 in the formula (3), R⁷ and R⁸ each independently represent a hydrocarbyl group having 1 to 20 carbon atoms, R⁹ represents a hydrocarbyl group having 1 to 20 carbon atoms, or a substituted alkyl group having 1 to 20 carbon atoms, at least one of a hydrogen atom or -CH₂- of the alkyl group being substituted with a group containing at least one kind of element selected from the group consisting of: silicon; nitrogen; phosphorus; oxygen; and sulfur, or represents an aromatic group having 6 to 20 carbon atoms, the aromatic group containing at least one kind of element selected from the group consisting of: nitrogen; phosphorus; oxygen; and sulfur, R¹⁰ represents an alkanediyl group having 1 to 20 carbon atoms, and n4 represents 1 or 2.

2. The polymer composition according to claim 1, wherein the polymer composition comprises 1 mass% or more and 50 mass% or less of the conjugated diene-based polymer particles (B) with respect to 100 mass% of all conjugated diene-based polymer components contained in the polymer composition.

3. The polymer composition according to claim 1 or 2, wherein the conjugated diene-based polymer (A) has a weight average molecular weight in terms of polystyrene measured by gel permeation chromatography of from 100,000 to 2,000,000.

4. The polymer composition according to any one of claims 1 to 3, wherein the conjugated diene-based polymer particles (B) have a number average particle diameter measured by a light scattering method of 10 nm or more and 800 nm or less.

5. The polymer composition according to any one of claims 1 to 4, wherein the conjugated diene-based polymer particles (B) are crosslinked particles.

6. The polymer composition according to any one of claims 1 to 5, further comprising a crosslinking agent.

7. A crosslinked polymer produced by using the polymer composition of claim 6.

8. A tire comprising the crosslinked polymer of claim 7.

## Patentansprüche

1. Polymerzusammensetzung, die umfasst:
(A) ein konjugiertes Dien-basiertes Polymer, das ein Reaktionsprodukt zwischen einem Polymer mit aktivem Polymerisationsende, wobei das Polymer durch Polymerisation einer konjugierten Dienverbindung oder einer konjugierten Dienverbindung und einer aromatischen Vinylverbindung in Gegenwart einer Alkalimetallverbindung oder einer Erdalkalimetallverbindung erhalten wird, und einer Verbindung, die durch eine der folgenden allgemeinen Formeln (1) bis (3) dargestellt wird, ist; und
(B) konjugierte Dien-basierte Polymerpartikel: 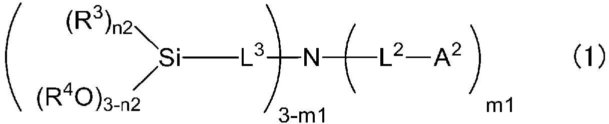 in Formel (1) stellt A² eine einwertige Gruppe dar, die über eine Iminogruppe, eine Amidgruppe, eine (Thio)carbonylgruppe, eine (Thio)carbonyloxygruppe, ein Sulfid oder ein Polysulfid an L² gebunden ist, oder stellt eine geschützte primäre Aminogruppe, eine geschützte sekundäre Aminogruppe, eine tertiäre Aminogruppe, eine Nitrilgruppe, eine Pyridylgruppe, eine (Thio)epoxygruppe, eine (Thio)isocyanatgruppe, eine (Thio)formylgruppe, einen (Thio)carbonsäureester, ein Metallsalz eines (Thio)carbonsäureesters, ein Carbonsäurehalogenid, eine Imidazolylgruppe oder eine durch die folgende Formel (1a) dargestellte Gruppe dar, L² und L³ stellen jeweils unabhängig voneinander eine Einfachbindung oder eine Hydrocarbylengruppe mit 1 bis 20 Kohlenstoffatomen dar, R³ und R⁴ stellen jeweils unabhängig voneinander eine Hydrocarbylgruppe mit 1 bis 4 Kohlenstoffatomen dar, n2 stellt von 0 bis 3 dar, und ml stellt 0 oder 1 dar; 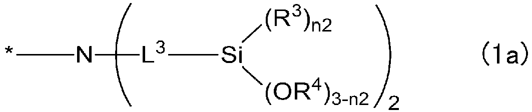 in Formel (1a) stellen L³, R³, R⁴ und n2 das gleiche wie in Formel (1) dar, und "*" stellt eine Bindungsstelle an L² dar; 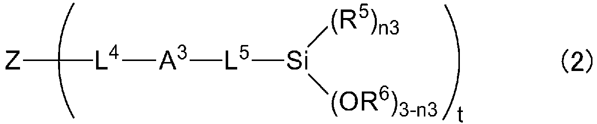 in Formel (2) stellt die A³ jeweils unabhängig voneinander eine Iminogruppe, eine Amidgruppe, eine (Thio)carbonylgruppe, eine (Thio)carbonyloxygruppe, eine sekundäre Aminogruppe oder eine tertiäre Aminogruppe dar, Z stellt eine stickstoffhaltige oder stickstofffreie t-valente Gruppe mit 1 bis 20 Kohlenstoffatomen dar, L⁴ stellt eine Einfachbindung oder eine Hydrocarbylengruppe mit 1 bis 20 Kohlenstoffatomen dar, L⁵ stellt eine Hydrocarbylengruppe mit 1 bis 20 Kohlenstoffatomen dar, R⁵ und R⁶ stellen jeweils unabhängig voneinander eine Hydrocarbylgruppe mit 1 bis 4 Kohlenstoffatomen dar, n3 stellt 0 oder 1 dar und "t" stellt 2 oder 3 dar; 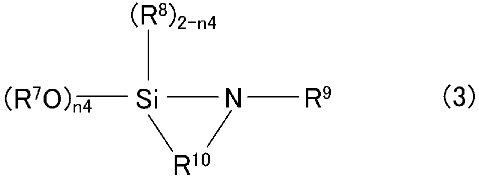 in Formel (3) stellen R⁷ und R⁸ jeweils unabhängig voneinander eine Hydrocarbylgruppe mit 1 bis 20 Kohlenstoffatomen dar, R⁹ stellt eine Hydrocarbylgruppe mit 1 bis 20 Kohlenstoffatomen oder eine substituierte Alkylgruppe mit 1 bis 20 Kohlenstoffatomen dar, wobei mindestens ein Wasserstoffatom oder -CH₂- der Alkylgruppe durch eine Gruppe substituiert ist, die mindestens eine Art von Element ausgewählt aus der Gruppe bestehend aus: Silicium; Stickstoff; Phosphor; Sauerstoff; und Schwefel enthält, oder stellt eine aromatische Gruppe mit 6 bis 20 Kohlenstoffatomen dar, wobei die aromatische Gruppe mindestens eine Art von Element ausgewählt aus der Gruppe bestehend aus: Stickstoff; Phosphor; Sauerstoff; und Schwefel enthält, R¹⁰ stellt eine Alkandiylgruppe mit 1 bis 20 Kohlenstoffatomen dar und n4 stellt 1 oder 2 dar.

2. Polymerzusammensetzung nach Anspruch 1, wobei die Polymerzusammensetzung 1 Massen-% oder mehr und 50 Massen-% oder weniger der konjugierten Dien-basierten Polymerpartikel (B) bezogen auf 100 Massen-% aller in der Polymerzusammensetzung enthaltenen konjugierten Dien-basierten Polymerkomponenten enthält.

3. Polymerzusammensetzung nach Anspruch 1 oder 2, wobei das konjugierte Dien-basierte Polymer (A) ein gewichtsgemitteltes Molekulargewicht, bezogen auf Polystyrol gemessen mittels Gelpermeationschromatographie, von 100.000 bis 2.000.000 aufweist.

4. Polymerzusammensetzung nach einem der Ansprüche 1 bis 3, wobei die konjugierten Dien-basierten Polymerpartikel (B) einen zahlengemittelten Partikeldurchmesser, gemessen mittels Lichtstreuungsverfahren, von 10 nm oder mehr und 800 nm oder weniger aufweisen.

5. Polymerzusammensetzung nach einem der Ansprüche 1 bis 4, wobei die konjugierten Dien-basierten Polymerpartikel (B) vernetzte Partikel sind.

6. Polymerzusammensetzung nach einem der Ansprüche 1 bis 5, die zusätzlich ein Vernetzungsmittel enthält.

7. Vernetztes Polymer, das unter Verwendung der Polymerzusammensetzung nach Anspruch 6 hergestellt ist.

8. Reifen, der das vernetzte Polymer nach Anspruch 7 enthält.

## Revendications

1. Composition de polymère comprenant :
(A) un polymère à base de diène conjugué qui est un produit de réaction entre un polymère ayant une extrémité de polymérisation active, le polymère étant obtenu par polymérisation d'un composé diène conjugué, ou d'un composé diène conjugué et d'un composé vinylique aromatique, en présence d'un composé de métal alcalin ou d'un composé de métal alcalino-terreux, et un composé représenté par l'une quelconque des formules générales (1) à (3) suivantes ; et
(B) des particules de polymère à base de diène conjugué : 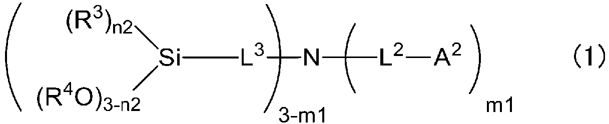 dans la formule (1), A² représente un groupe monovalent lié à L² via un groupe imino, un groupe amide, un groupe (thio)carbonyle, un groupe (thio)carbonyloxy, un sulfure ou un polysulfure, ou représente un groupe amino primaire protégé, un groupe amino secondaire protégé, un groupe amino tertiaire, un groupe nitrile, un groupe pyridyle, un groupe (thio)époxy, un groupe (thio)isocyanate, un groupe (thio)formyle, un ester d'acide (thio)carboxylique, un sel métallique d'un ester d'acide (thio)carboxylique, un halogénure carboxylique, un groupe imidazolyle, ou un groupe représenté par la formule (1a) suivante, L² et L³ représentant chacun indépendamment une liaison simple ou un groupe hydrocarbylène ayant de 1 à 20 atomes de carbone, R³ et R⁴ représentent chacun indépendamment un groupe hydrocarbyle ayant de 1 à 4 atomes de carbone, n2 représente de 0 à 3, et m1 représente 0 ou 1 ; 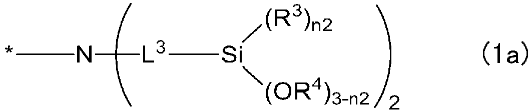 dans la formule (1a), L³, R³, R⁴ et n2 sont les mêmes que dans la formule (1), et "*" représente un site à lier à L² ; 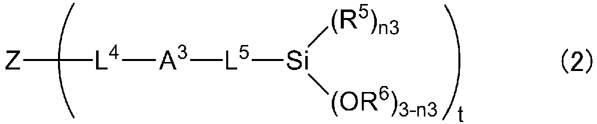 dans la formule (2), chaque A³ représente indépendamment un groupe imino, un groupe amide, un groupe (thio)carbonyl, un groupe (thio)carbonyloxy, un groupe amino secondaire ou un groupe amino tertiaire, Z représente un groupe t-valent contenant ou exempt d'atomes d'azote ayant de 1 à 20 atomes de carbone, L⁴ représente une liaison simple ou un groupe hydrocarbylène ayant de 1 à 20 atomes de carbone, L⁵ représente un groupe hydrocarbylène ayant de 1 à 20 atomes de carbone, R⁵ et R⁶ représentent chacun indépendamment un groupe hydrocarbyle ayant de 1 à 4 atomes de carbone, n3 représente 0 ou 1, et "t" représente 2 ou 3 ; et 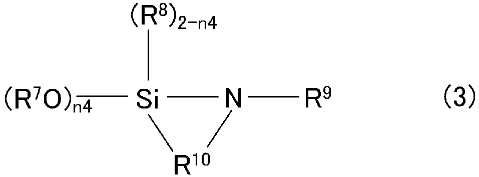 dans la formule (3), R⁷ et R⁸ représentent chacun indépendamment un groupe hydrocarbyle ayant de 1 à 20 atomes de carbone, R⁹ représente un groupe hydrocarbyle ayant de 1 à 20 atomes de carbone, ou un groupe alkyle substitué ayant de 1 à 20 atomes de carbone, au moins un atome d'hydrogène ou -CH₂- du groupe alkyle étant substitué par un groupe contenant au moins un type d'élément choisi dans le groupe consistant en : silicium ; azote ; phosphore ; oxygène ; et soufre, ou représente un groupe aromatique ayant de 6 à 20 atomes de carbone, le groupe aromatique contenant au moins un type d'élément choisi dans le groupe consistant en : azote ; phosphore ; oxygène ; et soufre, R¹⁰ représente un groupe alcanediyle ayant de 1 à 20 atomes de carbone, et n4 représente 1 ou 2.

2. Composition de polymère selon la revendication 1, dans laquelle la composition de polymère comprend 1 % en masse ou plus et 50 % en masse ou moins de particules de polymère à base de diène conjugué (B) par rapport à 100 % en masse de tous les composants de polymère à base de diène conjugué contenus dans la composition de polymère.

3. Composition de polymère selon la revendication 1 ou 2, dans laquelle le polymère à base de diène conjugué (A) a un poids moléculaire moyen en poids en termes de polystyrène mesuré par chromatographie par perméation de gel de 100 000 à 2 000 000.

4. Composition de polymère selon l'une des revendications 1 à 3, dans laquelle les particules de polymère à base de diène conjugué (B) ont un diamètre de particule moyen en nombre mesuré par un procédé de diffusion de la lumière de 10 nm ou plus et de 800 nm ou moins.

5. Composition de polymère selon l'une des revendications 1 à 4, dans laquelle les particules de polymère à base de diène conjugué (B) sont des particules réticulées.

6. Composition de polymère selon l'une des revendications 1 à 5, comprenant en outre un agent de réticulation.

7. Polymère réticulé produit en utilisant la composition de polymère selon la revendication 6.

8. Pneu comprenant le polymère réticulé selon la revendication 7.
